# FASCICULE DE BREVET EUROPEEN

(11) **EP 2 277 731 B1**
(45) Date de publication et mention de la délivrance du brevet: **25.11.2015**
(21) Numéro de dépôt: 10290311.9
(22) Date de dépôt: 09.06.2010
(51) Int. Cl.: B60K 6/387, B60K 6/48, B60K 6/36

(54) **Système pour l'entraìnement en déplacement d'un véhicule automobile de type hybride et procédé pour l'entraìnement d'un tel véhicule.**
System zum Antrieb eines Hybridfahrzeugs und Verfahren dafür
System for driving a hybrid vehicle and method therefore

(30) Priorité: 15.07.2009 FR 0903474
(43) Date de publication de la demande: 26.01.2011
(73) Titulaire: IFP Énergies nouvelles, 92852 Rueil-Malmaison Cedex (FR)
(72) Inventeur: Venturi, Stéphane, 07100 Roiffieux (FR)

(56) Documents cités:
- EP-A1- 1 321 645
- FR-A1- 2 797 228
- FR-A1- 2 922 163
- US-A1- 2006 247 086

## Description

La présente invention se rapporte à un système pour l'entraînement en déplacement d'un véhicule automobile de type hybride.

Comme cela est largement connu, ce type de véhicule combine, comme moyen de propulsion ou de traction, un moteur thermique, généralement à combustion interne, et une machine électrique rotative reliée à une source électrique, telle qu'un ou plusieurs accumulateurs électriques.

Cette combinaison permet d'optimiser les performances de ce véhicule, notamment en limitant les rejets des polluants dans l'atmosphère et en diminuant la consommation en carburant de l'ensemble du dispositif.

Comme il est déjà connu, notamment par la demande de brevet français N° 2 670 440, ce véhicule comporte un système d'entraînement avec un moteur thermique comprenant un arbre de sortie relié à un dispositif de variation de vitesse et une machine électrique raccordée à une batterie électrique. Ce système comprend également deux embrayages, un premier embrayage entre le moteur thermique et la machine électrique et un deuxième embrayage entre la machine électrique et le dispositif de variation de vitesse.

Ainsi, lorsque l'on souhaite entraîner en déplacement le véhicule avec un couple important disponible sur une grande plage de vitesses tout en limitant la génération de gaz d'échappement et de bruit, comme dans un site urbain, l'utilisation de la machine électrique est privilégiée pour entraîner l'essieu moteur du véhicule.

Par contre, pour des utilisations où une puissance d'entraînement élevée et une grande autonomie de fonctionnement sont demandées, le moteur thermique est utilisé pour entraîner l'essieu moteur et assurer ainsi le déplacement du véhicule.

Ce système d'entraînement bien que donnant satisfaction présente néanmoins des inconvénients non négligeables.

En effet, lorsque seule la machine électrique est utilisée pour entraîner le véhicule, celle-ci doit posséder un couple suffisant non seulement pour entraîner le véhicule mais aussi pour vaincre toutes les résistances (inertie, frottement, ...) inhérentes au véhicule et au dispositif de variation de vitesse.

De plus, lors du freinage du véhicule, une partie de l'énergie dégagée par ce freinage est absorbée par le dispositif de variation de vitesse et seule une partie minime de cette énergie est récupérée puis transformée en énergie électrique par la machine électrique.

Il est également connu par le document US2006/0247086 un système pour le déplacement d'un véhicule automobile hybride qui comprend un moteur thermique, une machine électrique, un arbre d'entraînement commandé en rotation par la machine et/ou le moteur pour actionner en rotation l'essieu moteur du véhicule, et un dispositif de variation de vitesse de rotation entre cet arbre d'entraînement et l'arbre du moteur comprenant deux voies alternatives de transmission de mouvement de rotation vers l'essieu moteur.

Ce système présente l'inconvénient d'être d'une grande complexité, d'un coût élevé et d'une utilisation difficile compte tenu des nombreuses pièces en rotation les unes par rapport aux autres.

La présente invention se propose de remédier aux inconvénients ci-dessus mentionnés grâce à un système d'entraînement simple avec des dispositifs assurant constamment le transfert vers l'essieu moteur et inversement.

A cet effet, l'invention concerne un système pour l'entraînement en déplacement d'un véhicule automobile de type hybride comprenant un moteur thermique avec un arbre, une machine électrique avec un rotor reliée à des accumulateurs électriques, un arbre d'entraînement lié en rotation directe avec le rotor et commandé en rotation par ladite machine et/ou ledit moteur pour actionner en rotation l'essieu moteur du véhicule, et un dispositif de variation de vitesse de rotation entre ledit arbre d'entraînement et l'arbre du moteur comprenant au moins deux voies alternatives de transmission de mouvement de rotation à l'essieu moteur, caractérisé en ce que l'une des voies de transmission comprend l'arbre du moteur et un accouplement débrayable pour la liaison à rotation avec l'arbre d'entraînement et en ce que l'autre des voies de transmission comprend l'arbre du moteur, un dispositif de réduction de vitesse de rotation de l'arbre du moteur comprenant un dispositif de transmission de mouvement démultiplicateur de vitesse entre l'arbre et au moins un des arbres à cames et un autre dispositif de transmission de mouvement démultiplicateur entre cet arbre à cames et un autre accouplement débrayable pour la liaison à rotation entre ledit dispositif de réduction de vitesse de rotation et l'arbre d'entraînement.

L'arbre d'entraînement peut porter un accouplement débrayable pour la transmission de son mouvement de rotation à l'essieu moteur.

L'arbre d'entraînement peut porter un actionneur pour rendre opérationnel l'un ou l'autre des accouplements.

L'arbre d'entraînement peut comprendre le rotor de la machine électrique.

L'arbre d'entraînement peut être relié à l'essieu moteur par un dispositif de transmission de mouvement.

L'invention concerne également un procédé pour l'entraînement en déplacement d'un véhicule automobile de type hybride comprenant un moteur thermique avec un arbre, une machine électrique avec un rotor reliée à des accumulateurs électriques, un arbre d'entraînement lié en rotation directe avec le rotor et commandé par ladite machine et/ou ledit moteur pour actionner en rotation l'essieu moteur du véhicule, et un dispositif de variation de vitesse entre ledit arbre d'entraînement et l'arbre du moteur, procédé selon lequel l'arbre du moteur est relie à l'arbre d'entraînement de l'essieu moteur par au moins deux voies alternatives de transmission de mouvement en rotation, caractérisé en ce qu'il consiste à relier l'arbre du moteur et un accouplement débrayable reliés avec l'arbre d'entraînement pour former l'une des voies de transmission, et à relier l'arbre du moteur, un dispositif de réduction de vitesse de rotation de l'arbre du moteur comprenant un dispositif de transmission de mouvement démultiplicateur de vitesse entre l'arbre et au moins un des arbres à cames et un autre dispositif de transmission de mouvement démultiplicateur entre cet arbre à cames et l'accouplement débrayable, et un autre accouplement débrayable pour la liaison à rotation entre ledit dispositif et l'arbre d'entraînement pour former l'autre des voies de transmission.

Le procédé peut consister à équiper l'une des voies de transmission de mouvement en rotation avec un dispositif de réduction de vitesse de rotation de l'arbre pour obtenir une rotation de l'arbre d'entraînement selon une vitesse de rotation différente de celle de l'autre des voies.

Pour réaliser le démarrage du moteur thermique, le procédé peut consister à alimenter la machine électrique par les accumulateurs et à relier le rotor de cette machine avec l'arbre du moteur par l'une des voies de transmission de mouvement.

Pour réaliser la recharge des accumulateurs, le procédé peut consister à relier l'arbre du moteur au rotor de la machine électrique par l'une des voies de transmission de mouvement.

Lors des phases de freinage du véhicule, le procédé peut consister à récupérer l'énergie mécanique de l'essieu moteur pour la transmettre à l'arbre du moteur en reliant l'arbre d'entraînement audit arbre par l'une des voies de transmission de mouvement.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma montrant un système d'entraînement d'un véhicule hybride selon l'invention,
- la figure 2 qui montre ce système pour une première configuration de fonctionnement,
- la figure 3 qui montre ce système dans une seconde configuration de fonctionnement,
- la figure 4 qui montre ce système dans une troisième configuration de fonctionnement,
- la figure 5 qui montre ce système dans une quatrième configuration de fonctionnement,
- la figure 6 qui illustre une première variante du système d'entraînement de la figure 1,
- la figure 7 qui est une deuxième variante du système d'entraînement de la figure 1,
- la figure 8 qui montre une autre illustration du système d'entraînement
- les figures 9 à 12 qui montrent les différentes configurations de fonctionnement de cette autre illustration et
- la figure 13 qui est une variante du système d'entraînement selon l'invention illustré à la figure 8.

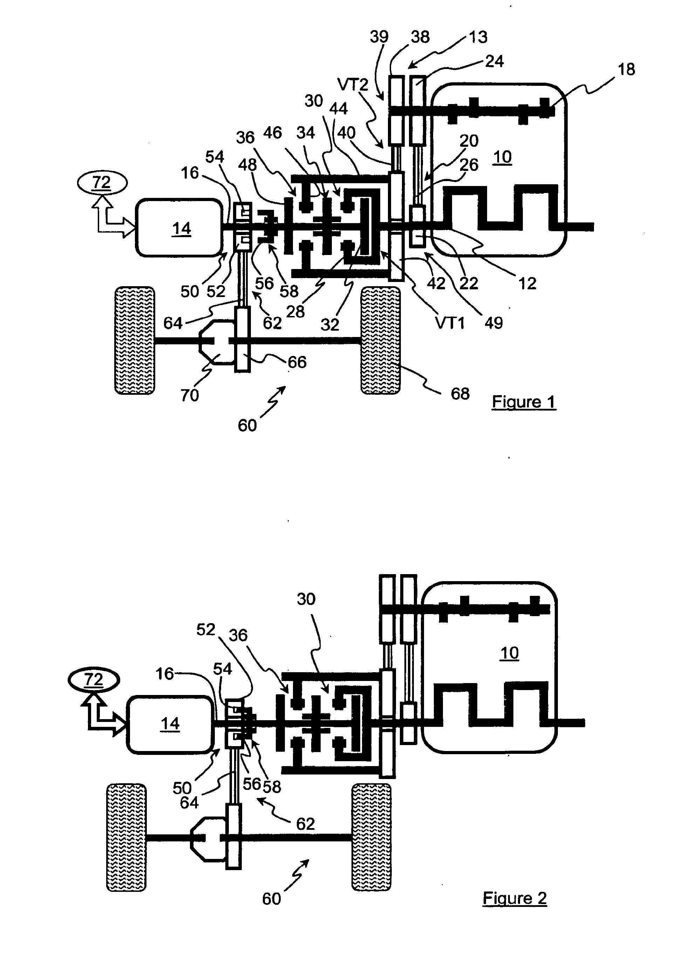

Comme illustré sur la figure 1, le système d'entraînement d'un véhicule hybride comprend un moteur thermique 10, notamment un moteur à combustion interne, avec un arbre moteur 12, ici le vilebrequin de ce moteur, contrôlant un dispositif de variation de vitesse 13. Ce système comprend également une machine électrique 14 avec un rotor 16, qui peut fonctionner en tant que moteur électrique ou en tant que générateur d'énergie électrique (ou alternateur).

Comme cela est connu, l'arbre 12 du moteur thermique entraîne en rotation au moins un arbre à cames 18, ici deux arbres à cames, qui contrôlent les soupapes d'échappement et d'admission (non représentées) de ce moteur par un dispositif de transmission de mouvement de rotation à démultiplication de vitesse 20. Habituellement, ce dispositif comporte une roue motrice 22 montée fixement sur l'arbre moteur 12, une roue réceptrice 24 de plus grand diamètre que le roue motrice et montée fixement sur chacun des arbres à cames, et une courroie de transmission 26 (ou une chaîne de transmission ou une cascade de pignons) reliant à rotation ces deux roues.

Comme mieux illustré sur cette figure, l'extrémité de l'arbre moteur 12 porte, fixe en rotation mais mobile en translation axiale, un élément 28 d'un accouplement débrayable à friction 30 entre cet arbre 12 et le rotor 16 de la machine 14. Cet élément, formant le plateau de réaction de cet accouplement, est en regard d'un autre plateau 32 qui constitue le plateau de pression fixe en rotation et en translation avec le rotor 16. Ces deux plateaux sont prévus pour être mis en contact l'un avec l'autre de manière à être solidaires en rotation sous l'action d'un actionneur 34 qui est porté par le rotor 16 tout en étant libre en translation sur ce rotor.

Ainsi, dans le cas où cet accouplement 30 est effectif, le rotor est en prise directe avec l'arbre moteur avec une voie de transmission de mouvement de rotation VT1, dite longue, correspondant à une vitesse égale à celle du vilebrequin du moteur.

Un autre accouplement débrayable à friction 36 est prévu pour assurer alternativement la transmission du mouvement de rotation provenant de l'arbre 12 du moteur thermique, via les arbres à cames 28, vers le rotor 16. Pour cela, les arbres à cames portent fixement une poulie motrice 38, placée en regard de la roue 24 et qui fait partie d'un autre dispositif de transmission de mouvement de rotation à démultiplication de vitesse 39. Cette poulie est reliée par une courroie de transmission 40 (ou une chaîne de transmission ou une cascade de pignons) à une poulie réceptrice 42 (de plus grand diamètre que la poulie motrice) montée libre en rotation sur l'arbre moteur 12 en étant fixe axialement sur celui ci. Cette poulie, placée en regard de la roue motrice 22, est reliée à un carter 44 entourant l'accouplement 30 entre le rotor et l'arbre moteur. Ce carter porte un plateau de réaction mobile axialement 46 placé en vis-à-vis de l'actionneur 34 et est prévu pour assurer la liaison en rotation avec un autre plateau de pression fixe 48 porté par le rotor 16 et cela sous l'impulsion de l'actionneur 34 en formant ainsi l'autre accouplement débrayable à friction 36.

Lorsque cet autre accouplement est opérationnel, le rotor 16 est relié en rotation avec l'arbre 12 du moteur thermique avec une voie de transmission de mouvement de rotation VT2, dite courte, qui correspond à la démultiplication de la vitesse de rotation de cet arbre 12 par le dispositif de réduction de vitesse 49. Ce dispositif de réduction comprend ainsi le dispositif de démultiplication de vitesse 39 et le dispositif de démultiplication de vitesse 20.

De ce fait, le rotor de la machine électrique peut être entraîné en rotation par le moteur thermique selon deux voies de transmissions alternatives VT1 ou VT2 et cela par engagement de l'un ou d'autre des accouplements 30 ou 36.

Grâce à cela le rotor 16 peut être entraîné en rotation à des vitesses différentes, soit une grande vitesse par l'intermédiaire de l'arbre 12, soit une petite vitesse par l'intermédiaire d'une réduction de la vitesse de rotation de l'arbre 12 grâce au dispositif de réduction de vitesse 49.

Comme mieux visible sur cette figure, le rotor 16 porte un autre accouplement débrayable 50, ici un accouplement à engrènement, comportant un plateau 52 fixe en translation tout en étant monté libre en rotation sur le rotor. Ce plateau comporte des évidements de coopération 54 avec des doigts 56 d'un actionneur 58 monté fixement en rotation sur le rotor mais librement en translation sur celui-ci.

De manière à assurer la transmission de mouvement en rotation entre ce rotor et un essieu moteur 60, un dispositif de transmission de mouvement 62 est placé entre ce rotor et cet essieu. De manière préférentielle, il est prévu de placer une courroie de transmission 64 entre le plateau 52 et une poulie fixe 66 située sur cet essieu. Cette poulie permet ainsi d'entraîner les roues motrices 68 du véhicule par l'intermédiaire d'une transmission, comme un pont différentiel 70.

Bien entendu, la machine électrique 14 est raccordée à des accumulateurs électriques 72 en étant contrôlée par un organe de commande (non représenté) pour assurer l'alimentation de ce moteur et/ou la charge de ces accumulateurs.

De même, les actionneurs 34 et 58 sont contrôlés par tous moyens de commande (non représenté), comme des vérins, permettant leur déplacement sur le rotor 16 pour l'engagement souhaité des accouplements 30, 36, 50, et cela sous l'effet d'une unité de commande, telle que le calculateur du groupe motopropulseur (non représenté) que comporte tout véhicule.

Ainsi le dispositif de variation de vitesse 13 comprend un premier étage de vitesse formé par la voie VT1 et un deuxième étage de vitesse, plus petit que le premier, avec la voie VT2.

Il va être fait état maintenant des différentes configurations du système d'entraînement en fonction du mode de traction utilisé et/ou du fonctionnement du moteur thermique ainsi que de la machine électrique.

Pour des raisons de simplification dans la suite de la description, l'accouplement 30 entre l'arbre 12 et le rotor 16 est baptisé "accouplement grande vitesse", l'autre accouplement à friction 36 est baptisé "accouplement petite vitesse" et l'accouplement à engrènement 50 est dénommé "crabot".

La configuration de la figure 2 illustre le mode électrique où seule la machine électrique 14 est utilisée, notamment en tant que machine motrice du véhicule.

Pour ce faire, aucun des deux accouplements grande ou petite vitesse 30, 36 n'est engagé alors que le crabot 50 est en prise par le déplacement de l'actionneur 58 qui permet d'enclencher ses doigts 56 dans les évidements 54 du plateau 52. Par cela, dès que le machine électrique 14 est alimentée par les accumulateurs 72, le rotor 16 est entraîné en rotation et transmet son mouvement de rotation à l'actionneur 58 qui est relié à rotation au plateau 52. Cette rotation est ensuite transmise à l'essieu moteur 60 par l'intermédiaire de la courroie 64 du dispositif de transmission de mouvement 62.

Cette configuration permet de faire fonctionner le véhicule en marche avant ou en marche arrière tout en laissant la possibilité au moteur 10 de rester en fonctionnement, notamment pour l'entraînement des auxiliaires du véhicule (pompe de direction assistée, compresseur de climatisation,...).

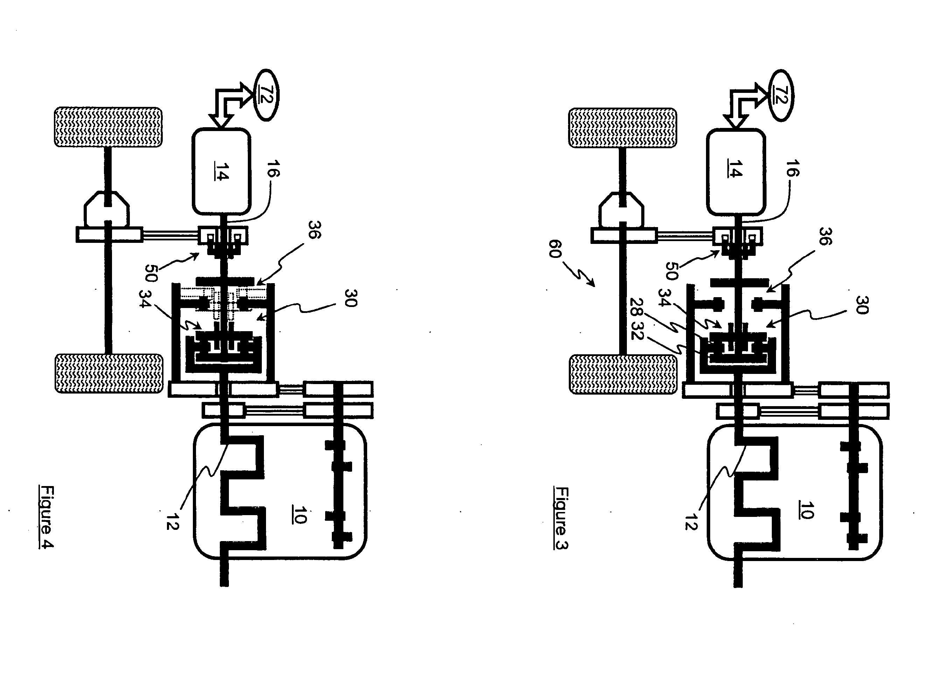

Dans une autre configuration illustrée à la figure 3, le crabot 50 est en prise, comme décrit précédemment, et transmet de ce fait le mouvement de rotation du rotor 16 à l'essieu moteur 60 dès que la machine électrique 14 est alimentée par les accumulateurs 72. Par cela, cette machine 14 est utilisée en tant que machine motrice pour le véhicule automobile.

Une fois la rotation du rotor 16 obtenue, l'accouplement grande vitesse 30 est enclenché par déplacement de l'actionneur 34 vers la droite (en considérant la figure 1). Ceci permet de relier en rotation le rotor 16 avec l'arbre 12 du moteur thermique par la liaison des plateaux de réaction et de pression 28 et 32. Dans ce cas, il est possible de réaliser le démarrage de ce moteur par l'entraînement en rotation de l'arbre 12 sous l'impulsion du rotor 16 et sous le contrôle du calculateur.

Dès que le démarrage du moteur est obtenu, l'actionneur 34 est commandé vers la gauche de manière à rendre inopérationnel l'accouplement grande vitesse et cela sans enclencher l'accouplement petite vitesse 36. Le moteur reste donc en fonctionnement, notamment pour assurer l'entraînement de ses auxiliaires, comme précédemment mentionné.

Par cela, la machine électrique 14 a une double fonction, la traction du véhicule et le démarrage du moteur thermique alors que le véhicule est en circulation et cela sans perturber le fonctionnement de cette machine électrique utilisée pour l'entraînement du véhicule.

Dans la configuration de la figure 4, la traction du véhicule est assurée à la fois par la machine électrique 14 et par le moteur thermique 10.

Dans ce cas, le crabot 50 est en prise, comme précédemment décrit en relation avec la figure 2. La machine électrique 14 est donc utilisée en tant que machine motrice pour le véhicule automobile et sa puissance est utilisée pour assurer cette traction.

Conjointement, l'un des accouplements grande vitesse ou petite vitesse 30 ou 36 (en traits forts ou en traits pointillés) est engagé par l'actionneur 34 en connectant ainsi l'arbre 12 avec le rotor 16. Suite à cette connexion, la puissance générée par ce moteur est transmise par l'arbre 12 au rotor 16 en venant ainsi se cumuler à celle transmise par la machine électrique 14.

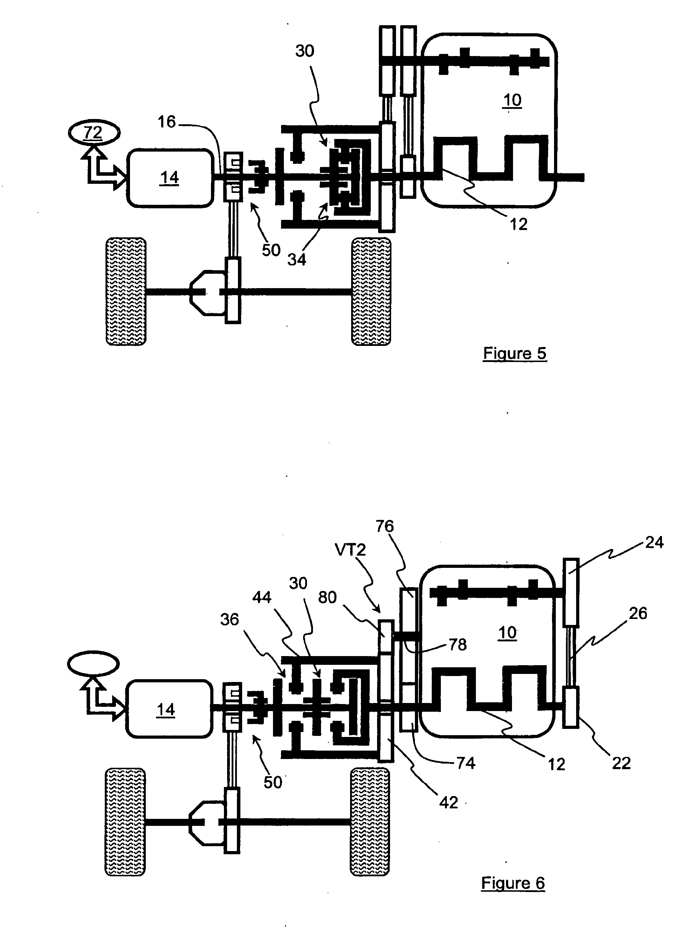

Il est considéré dans cette configuration que le démarrage du moteur a déjà été effectué, soit comme cela a été décrit en relation avec la figure 3, soit comme il sera décrit en rapport avec la figure 5 qui suit.

Dans la disposition de la figure 5, la machine électrique 14 est utilisée pour assurer le démarrage du moteur 10.

Pour cela, le crabot 50 n'est pas opérationnel est l'accouplement grande vitesse 30 est engagé sous l'impulsion de l'actionneur 34.

Dès que la machine électrique 14 est alimentée en courant par les accumulateurs 72, son rotor 16 est entraîné en rotation. Compte tenu de la liaison par l'accouplement 30 entre ce rotor et l'arbre 12, ce dernier est entraîné en rotation par le rotor. Le démarrage du moteur est donc réalisé et cela sous le contrôle du calculateur.

Bien évidement, dès que le démarrage du moteur est obtenu, l'accouplement grande vitesse est rendu inopérationnel sous l'impulsion de l'actionneur 34 et le moteur reste en fonctionnement.

Il va être fait état maintenant d'autres fonctionnements du moteur thermique ainsi que de la machine électrique et cela en relation avec les figures déjà décrites.

Pour un entraînement du véhicule uniquement par le moteur thermique 10, la configuration utilisée est celle de la figure 4 avec l'enclenchement du crabot 50 et de l'un des accouplements à friction 30 ou 36.

Ceci permet donc d'établir une liaison à rotation à grande ou à petite vitesse entre l'arbre 12 et le rotor 16. Le véhicule est donc entraîné par le moteur thermique selon deux vitesses différentes. La rotation du rotor 16 peut être utilisée pour convertir la machine électrique 14 en tant que générateur de courant (ou alternateur) pour assurer notamment la recharge électrique des accumulateurs 72.

Dans un autre fonctionnement avec une configuration correspondant à la figure 5, le moteur thermique 10, qui est déjà en marche, est utilisé uniquement pour assurer la recharge des accumulateurs.

La liaison en rotation entre le rotor 16 et l'arbre 12 est assuré par la mise en action de l'un des accouplements à friction 30, 36 et le crabot est désenclenché.

Le rotor 16 de la machine 14 est entraîné en rotation par l'arbre 12 et cette machine sert donc de générateur de courant pour recharger les accumulateurs et/ou alimenter des accessoires du véhicule.

Pour ce qui concerne la récupération d'énergie au freinage, la configuration utilisée correspond à celle de la figure 2 où seul le crabot 50 est enclenché.

Lors du freinage, l'énergie à récupérer provient de l'essieu moteur 60 qui entraîne en rotation le rotor 16 via le dispositif de transmission 62. Cette rotation est donc utilisée pour transformer la machine électrique 14 en générateur de courant pour recharger les accumulateurs et/ou alimenter des accessoires du véhicule.

Selon la configuration illustrée à la figure 3, il est possible à la fois de récupérer l'énergie au freinage pour la machine électrique 14, comme décrit ci-dessus, et de réaliser un frein moteur par le moteur thermique 10.

L'accouplement grande vitesse 30 est opérationnel ainsi que le crabot 50. L'énergie provenant de l'essieu 60 est donc transmise au rotor 16 par le dispositif de transmission de mouvement 62 en entraînant en rotation ce rotor, comme précédemment mentionné. Compte de la liaison en rotation entre le rotor et l'arbre 10 du moteur, ce dernier transmet un couple négatif et ralentit la rotation du rotor. Ce ralentissement est ensuite transmis à l'essieu moteur par le dispositif de transmission 62.

Bien entendu, il ne peut être utilisé que le frein moteur en désactivant les moyens de commande de la machine électrique. Cela permet de laisser tourner librement le rotor sans qu'il n'ait une quelconque répercussion sur les accumulateurs 72.

Ainsi, dans le cas de l'exemple décrit en relation avec les figures 1 à 5, le rotor 16 est utilisé en tant qu'arbre d'entraînement, soit pour l'essieu moteur 60, soit pour le moteur thermique 10 (démarrage, frein moteur, ...) et/ou pour la machine électrique 14 (recharge des accumulateurs,...).

La figure 6 illustre une variante de l'invention et pour cela comporte les mêmes références pour les éléments communs à la figure 1.

Cette variante se différentie de la figure 1 par la constitution de la voie de transmission courte VT2.

Cette voie de transmission comprend une roue motrice 74, avantageusement une roue dentée, montée fixement sur l'arbre 12 du moteur 10. Cette roue entraîne, ici par engrènement, une roue dentée réceptrice 76 de plus grand diamètre que la roue motrice et montée fixement sur un axe récepteur 78 tournant librement une partie fixe du véhicule, comme le moteur. La roue motrice 74 associée à la roue réceptrice 76 forme ainsi un dispositif de transmission de mouvement de rotation à démultiplication de vitesse. Cet axe porte fixement une poulie de transmission 80 qui entraîne en rotation la poulie réceptrice 42 portant le carter 44, cette poulie réceptrice étant de plus grand diamètre que la poulie 80. Avantageusement, la poulie de transmission 80 et la poulie réceptrice 42 sont des roues dentées qui engrènent l'une avec l'autre en formant un autre dispositif de transmission de mouvement de rotation à démultiplication de vitesse.

Avantageusement, le dispositif de commande des arbres à cames 18 qui contrôlent les soupapes d'échappement et d'admission est le même que celui décrit précédemment en relation avec la figure 1 mais avec un placement sur l'autre côté du moteur, comme mieux montré sur cette figure 6. Ce dispositif comporte donc la roue motrice 22 montée fixement sur l'arbre moteur 12, la roue réceptrice 24 montée fixement sur les arbres à cames et la courroie de transmission 26.

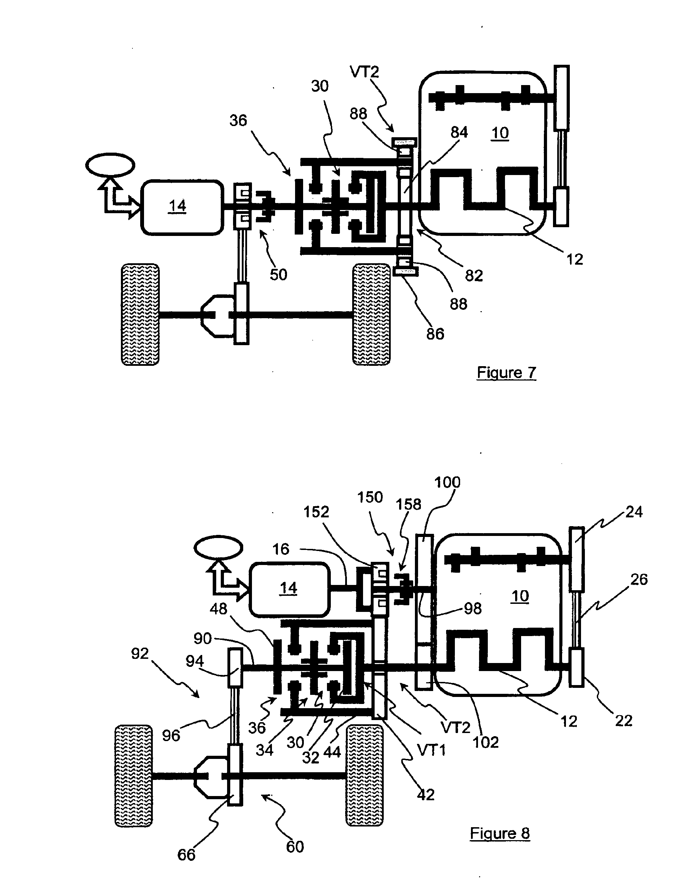

La figure 7 illustre une autre variante de l'invention pour la constitution de la voie de transmission courte VT2.

Cette voie de transmission compte un train épicycloïdal 82, formant dispositif de transmission de mouvement de rotation à démultiplication de vitesse, avec une planétaire intérieur rotatif 84 porté fixement par l'arbre 12 du moteur 10, un planétaire extérieur fixe 86 porté par un élément fixe du moteur ou du véhicule et des satellites 88 portés par le carter 44 de l'accouplement 36 et coopérant avec les planétaires.

Les différentes configurations du système d'entraînement en fonction du mode de traction utilisé et/ou du fonctionnement du moteur thermique ainsi que de la machine électrique pour les variantes des figures 6 et 7 sont identiques à celles décrites en relation avec les figures 1 à 5.

Sur la variante de la figure 8, les plateaux de pression 32 et 48 des accouplements 30 et 36 ainsi que l'actionneur 34 sont portés par un arbre rotatif indépendant d'entraînement 90 placé dans le prolongement de l'arbre 12 du moteur 10. Cet arbre indépendant est relié par un dispositif de transmission de mouvement 92 à l'essieu moteur 60. Ce dispositif comprend une poulie fixe 94 placée en bout de l'arbre indépendant et une courroie de transmission 96 entre cette poulie et la poulie 66 de l'essieu moteur 60.

Le plateau 152 du crabot 150, identique au crabot 50 décrit précédemment, est lié fixement au rotor 16 de la machine électrique 14. Ce plateau coopère en rotation, avantageusement par engrènement, avec la poulie réceptrice 42 qui porte le carter 44 pour l'accouplement petite vitesse 36. De ce fait, la machine électrique avec son rotor 16 sont placés sensiblement parallèlement à l'arbre indépendant 90.

L'actionneur 158 du crabot 150 est porté librement en translation mais fixement en rotation par un axe tournant 98 supporté par une partie fixe du moteur, comme son carter. Une roue réceptrice 100 est placé fixement sur cet axe et coopère, préférentiellement par engrènement, avec une roue motrice 102 portée fixement par l'arbre 12 du moteur.

Similairement à la figure 1, l'arbre d'entraînement indépendant 90 est en prise directe avec l'arbre 12 du moteur 10 avec une voie de transmission VT1, dite longue, correspondant à une vitesse égale à celle du vilebrequin du moteur lorsque l'accouplement grande vitesse 30 est opérationnel sous l'impulsion de l'actionneur 34.

De même, lorsque l'accouplement petite vitesse 36 est actionné et le crabot est enclenché, l'arbre indépendant 90 est relié en rotation avec l'arbre 12 du moteur avec une voie de transmission VT2, dite courte. Cette voie courte comprend la roue motrice 102, la roue réceptrice 100, le plateau 152 et la poulie réceptrice 42 avec une démultiplication de la vitesse entre l'arbre 12 et l'arbre indépendant 90.

Grâce à cela l'arbre indépendant 90 peut être entraîné en rotation à des vitesses différentes, soit une grande vitesse par l'intermédiaire de l'arbre 12 et la voie longue VT1, soit une petite vitesse par l'intermédiaire de la démultiplication provenant de la voie de transmission courte VT2.

Les différentes phases de fonctionnement de cette variante sont sensiblement identiques à celles des figures 1 à 5.

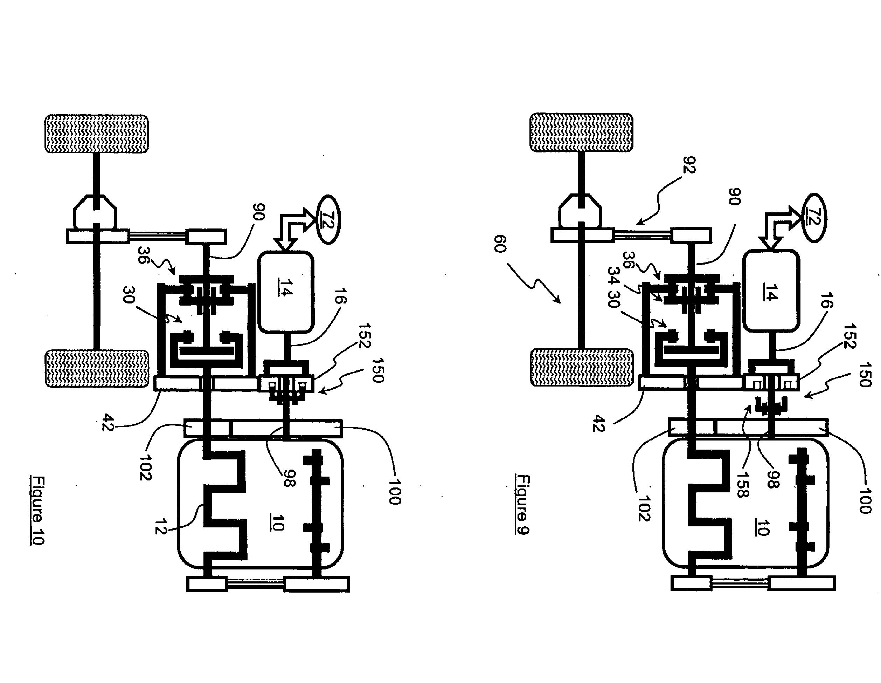

Ainsi, pour le mode de traction électrique où la machine électrique 14 est alimentée par les accumulateurs 72 (figure 9), le crabot 150 n'est pas enclenché et l'accouplement petite vitesse 36 est engagé. Par cela, la rotation du rotor 16 est transmise à la poulie 42 par le plateau 152 puis à l'arbre indépendant 90 par l'accouplement petite vitesse 36. Cette rotation est ensuite retransmise à l'essieu moteur 60 par le dispositif de transmission 92.

Le véhicule fonctionne donc sous une traction d'origine électrique et cela en marche avant ou en marche arrière tout en laissant la possibilité au moteur 10 de rester en fonctionnement, notamment pour l'entraînement des auxiliaires du véhicule (pompe de direction assistée, compresseur de climatisation,...).

Pour associer ce mode de traction électrique au démarrage éventuel du moteur (si celui n'est pas en fonctionnement), le crabot 150 est enclenché et le rotor 16 est relié à rotation avec l'axe 98. La rotation de cet axe entraîne la rotation de la roue réceptrice 100 qui entraîne à son tour en rotation la roue 102. La rotation de cette roue, qui est liée à l'arbre 12, permet ainsi de pouvoir réaliser le démarrage du moteur (figure 10).

Bien évidement, une fois que le moteur est démarré, le crabot est désenclenché et le moteur reste en fonctionnement, pour assurer l'entraînement de ses auxiliaires notamment.

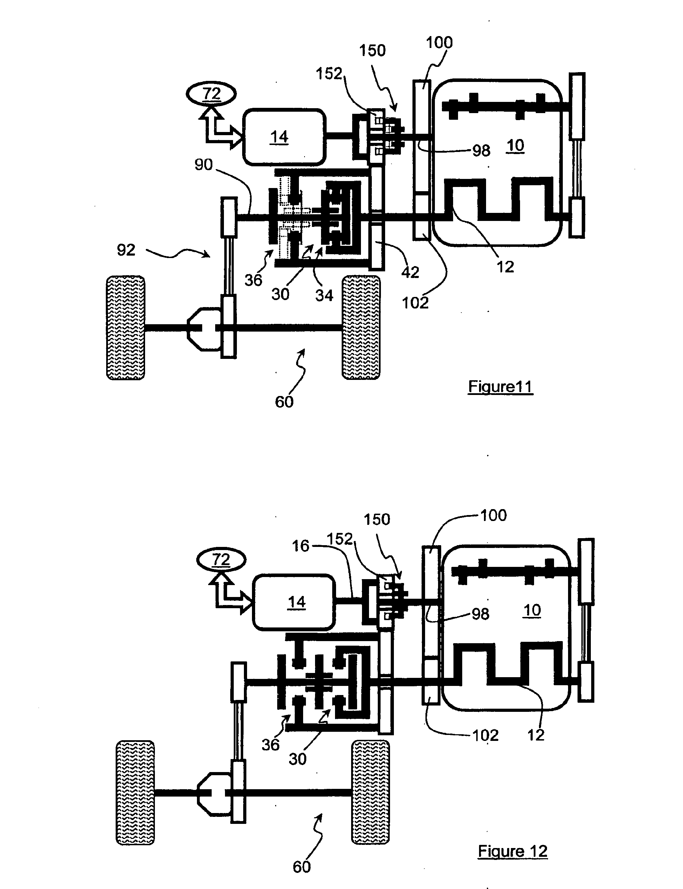

Pour l'exemple de la figure 11, la traction du véhicule est assurée uniquement par le moteur 10 et cela à grande vitesse ou à petite vitesse.

Pour l'entraînement à grande vitesse, seul l'accouplement 30 est opérationnel sous l'impulsion de l'actionneur 34. La rotation de l'arbre 12 est transmise par l'accouplement 30 directement à l'arbre indépendant 90 qui entraîne l'essieu moteur 60 par le dispositif 92.

Pour la petite vitesse, le crabot 150 est enclenché en rendant solidaire le plateau 152 avec l'axe 98 et l'accouplement petite vitesse 36 est commandé par l'actionneur 34 (comme indiqué en trait pointillé sur la figure). La rotation de l'arbre 12 est transmise à l'arbre indépendant 90 par la roue motrice 102, la roue réceptrice 100, le plateau 152, la poulie 42 et l'accouplement 36 en étant démultipliée.

Dans l'exemple illustré à la figure 12, la machine électrique 14 est utilisée pour assurer le démarrage du moteur 10.

Pour cela, le crabot 150 est enclenché et aucun des accouplements 30 ou 36 n'est opérationnel.

Dès que la machine électrique 14 est alimentée en courant par les accumulateurs 72, son rotor 16 est entraîné en rotation. De par la liaison avec l'axe 98, la roue 100 est entraînée en rotation. Cette rotation est transmise à la roue motrice 102 qui entraîne l'arbre 12 pour permettre le démarrage du moteur 10.

Toutes les autres configurations du système d'entraînement en fonction du mode de traction utilisé et/ou du fonctionnement du moteur thermique ainsi que de la machine électrique comme déjà mentionné en relation avec les figures 1 à 5 sont également possible avec cette variante.

Pour la traction électrique par la machine 14 associée à la traction thermique par le moteur 10, la configuration correspond à celle de la figure 10.

Le crabot 150 est enclenché et l'accouplement petite vitesse 36 est opérationnel.

La rotation du rotor 16 de la machine électrique est transmise à l'arbre indépendant 90 par le plateau 152, la poulie 42 et l'accouplement 36. Simultanément, la rotation de l'arbre 12 est transmise à la poulie 42 par la roue motrice 102, la roue réceptrice 100 et le plateau 152.

Il peut être envisagé de rendre opérationnel l'accouplement grande vitesse 30 au lieu de l'accouplement 36. Dans ce cas, la rotation de l'arbre 12 est directement transmise à l'arbre indépendant 90.

La traction électrique du véhicule est alors réalisée par la transmission de la rotation du rotor 16 à l'arbre indépendant 90 au travers de la roue 100 et de la roue 102 de par l'enclenchement du crabot 150.

La traction thermique du véhicule avec la recharge des accumulateurs par la machine 14 correspond à la configuration de cette même figure de la figure 10.

Avec la configuration selon laquelle le crabot 150 est enclenché et l'accouplement petite vitesse 30 est opérationnel, la rotation de l'arbre 12 du moteur 10 est transmise à la fois à la machine électrique 14 et à l'arbre indépendant 90.

Cette transmission de la rotation à la machine 14 est réalisée par l'intermédiaire de la roue motrice 102, la roue réceptrice 100 et le crabot 150 relié au rotor 16. La rotation de ce rotor permet d'utiliser cette machine en tant que génératrice de courant pour recharger les accumulateurs 72.

La rotation du plateau 152 du crabot se transmet à la poulie réceptrice 42 puis à l'arbre indépendant 90 par l'accouplement 36.

Dans l'alternative selon laquelle l'accouplement grande vitesse 30 est opérationnel au lieu de l'accouplement petite vitesse 36, la transmission du mouvement de rotation de l'arbre 12 au rotor 16 se réalise comme mentionné ci-dessus avec en plus la rotation libre de la poulie 42. Cette transmission de mouvement de rotation de l'arbre 12 se réalise également par la liaison directe avec l'arbre indépendant 90 au travers de l'accouplement 30.

Dans le cas de la petite vitesse avec l'accouplement 36 opérationnel, la rotation du rotor 16 de la machine électrique est obtenue par la rotation de l'arbre 12, des roues 100 et 102 et du plateau 152. Simultanément, la rotation de l'arbre 12 est transmise à l'arbre indépendant 90 par la roue motrice 102, la roue réceptrice 100, le plateau 152, la poulie 42 et l'accouplement 36.

La recharge des accumulateurs par la machine 14 correspond à la configuration de la figure 12 avec le crabot 150 en position enclenché, les accouplements 30 et 36 n'étant pas engagés. Le mouvement de rotation de l'arbre 12 est ainsi transmis au rotor 16 par les roues 102, 100 et le plateau 152 relié à ce rotor.

La récupération d'énergie au freinage correspond à la configuration de la figure 9.

Le crabot 150 n'est pas enclenché et l'accouplement petite vitesse 36 est engagé sous l'impulsion de l'actionneur 34.

L'essieu moteur 60 entraîne en rotation l'arbre indépendant 90 via le dispositif de transmission 92. Cette rotation est ensuite transmise au rotor 16 par l'accouplement 36, la poulie 42 et le plateau 152 relié à ce rotor. Cette rotation du rotor permet d'utiliser la machine électrique 14 en tant que générateur de courant pour recharger les accumulateurs et/ou alimenter des accessoires du véhicule.

Dans l'éventualité où le crabot 150 est déjà enclenché sous l'impulsion de l'actionneur 158, cela permet également de réaliser un frein moteur, en plus de la récupération d'énergie. En effet, la rotation du plateau 152 est transmise à l'arbre 12 du moteur par les roues 100 et 102. En considération de la liaison entre l'arbre indépendant 90 et le plateau 152, le ralentissement de celui-ci par l'arbre 12 du moteur entraîne le ralentissement de l'arbre indépendant 90 et par conséquent de l'essieu moteur 60.

Il est aussi possible de réaliser un frein moteur en plus de la récupération d'énergie en rendant opérationnel l'accouplement grande vitesse 30.

Par cela, l'essieu 60 entraîne l'arbre 12 au travers de l'embrayage 30, qui lui même entraîne le rotor 16 au travers de la roue 102, la roue 100 et du plateau 152 sous l'impulsion du crabot 150 enclenché.

Il peut être également envisagé de n'utiliser que le frein moteur en ne rendant opérationnel que l'accouplement à friction 30. La rotation de l'arbre indépendant 90 est ainsi ralentie par l'arbre 12 au travers de l'accouplement grande vitesse 30.

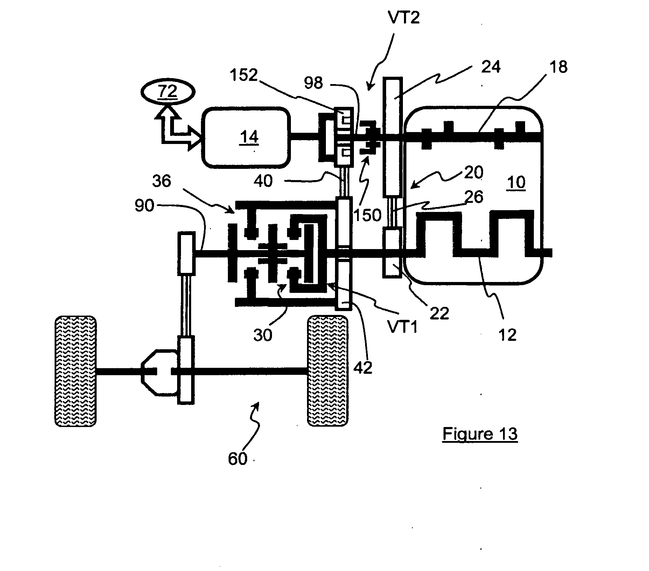

L'exemple illustré à la figure 13 en une autre configuration du système montré à la figure 8.

Cet exemple se différencie de celui de la figure 8 par le fait que les roues 22, 24 et la courroie 26 sont placées dans la situation de la figure 1 en formant le dispositif de transmission de mouvement de rotation à démultiplication de vitesse 20 de cette figure 1. Par cela, la roue motrice 22 est portée par l'arbre 12, la roue réceptrice 24 est portée par les arbres à cames 18 et la courroie 26 relie à rotation les deux roues.

De plus, l'axe tournant 98 de la figure 8 est relié de manière fixe et coaxiale à l'arbre à cames 18.

De manière avantageuse, la poulie réceptrice 42 est reliée par une courroie 40 au plateau 152 du crabot 150.

Dans cette configuration, la voie de transmission longue VT1 est formée, comme précédemment décrit, par l'arbre 12 relié par l'accouplement grande vitesse 30 à l'arbre d'entraînement indépendant 90. Pour ce qui concerne la voie de transmission courte VT2, celle-ci est formée par le dispositif de transmission de mouvement de rotation à démultiplication de vitesse 20 et par un autre dispositif de transmission de mouvement de rotation à démultiplication de vitesse avec le plateau 152 (crabot 150 enclenché), la courroie 40, la poulie réceptrice 42 et l'accouplement petite vitesse 36.

Le fonctionnement de cette autre illustration du système d'entraînement est sensiblement identique à celui décrit en relation avec les figures 8 à 12.

La présente invention n'est pas limitée aux exemples décrits mais englobe toutes variantes et tous équivalents sans sortir du cadre de l'invention tel que définie par les revendications.

## Revendications

1. Système pour l'entraînement en déplacement d'un véhicule automobile de type hybride comprenant un moteur thermique (10) avec un arbre (12), une machine électrique (14) avec un rotor (16) reliée à des accumulateurs électriques (72), un arbre d'entraînement (16) lié en rotation directe avec le rotor et commandé en rotation par ladite machine et/ou ledit moteur pour actionner en rotation l'essieu moteur (60) du véhicule, et un dispositif de variation de vitesse de rotation (13) entre ledit arbre d'entraînement et l'arbre (12, 90) du moteur (10) comprenant au moins deux voies alternatives de transmission de mouvement de rotation (VT1, VT2) à l'essieu moteur (60), **caractérisé en ce que** l'une des voies de transmission (VT1) comprend l'arbre (12) du moteur (10) et un accouplement débrayable (30) pour la liaison à rotation avec l'arbre d'entraînement (16, 90) et **en ce que** l'autre des voies de transmission (VT2) comprend l'arbre (12) du moteur, un dispositif de réduction de vitesse de rotation (49) de l'arbre du moteur comprenant un dispositif de transmission de mouvement démultiplicateur de vitesse (20) entre l'arbre (12) et au moins un des arbres à cames (18) et un autre dispositif de transmission de mouvement démultiplicateur (39) entre cet arbre à cames et un autre accouplement débrayable (36) pour la liaison à rotation entre ledit dispositif de réduction de vitesse de rotation et l'arbre d'entraînement (16, 90).

2. Système pour l'entraînement en déplacement d'un véhicule automobile selon la revendication 1, **caractérisé en ce que** l'arbre d'entraînement (16) porte un accouplement débrayable (50) pour la transmission de son mouvement de rotation à l'essieu moteur (60).

3. Système pour l'entraînement en déplacement d'un véhicule automobile selon l'une des revendications précédentes, **caractérisé en ce que** l'arbre d'entraînement porte un actionneur (34) pour rendre opérationnel l'un ou l'autre des accouplements (30, 36).

4. Système pour l'entraînement en déplacement d'un véhicule automobile selon la revendication 1, **caractérisé en ce que** l'arbre d'entraînement comprend le rotor (16) de la machine électrique (14).

5. Système pour l'entraînement en déplacement d'un véhicule automobile selon l'une des revendications précédentes, **caractérisé en ce que** l'arbre d'entraînement (16) est relié à l'essieu moteur par un dispositif de transmission de mouvement (62).

6. Procédé pour l'entraînement en déplacement d'un véhicule automobile de type hybride comprenant un moteur thermique (10) avec un arbre (12), une machine électrique (14) avec un rotor (16) reliée à des accumulateurs électriques (72), un arbre d'entraînement (16) lié en rotation directe avec le rotor et commandé par ladite machine et/ou ledit moteur pour actionner en rotation l'essieu moteur (60) du véhicule, et un dispositif de variation de vitesse (13) entre ledit arbre d'entraînement et l'arbre (12) du moteur (10), procédé selon lequel l'arbre (12) du moteur (10) est relie à l'arbre d'entraînement (16, 90) de l'essieu moteur (60) par au moins deux voies alternatives de transmission de mouvement en rotation (VT1, VT2), **caractérisé en ce qu'**il consiste à relier l'arbre (12) du moteur (10) et un accouplement débrayable (30) reliés avec l'arbre d'entraînement (16) pour former l'une des voies de transmission (VT1), et à relier l'arbre (12) du moteur, un dispositif de réduction de vitesse de rotation (49) de l'arbre du moteur comprenant un dispositif de transmission de mouvement démultiplicateur de vitesse (20) entre l'arbre (12) et au moins un des arbres à cames (18) et un autre dispositif de transmission de mouvement démultiplicateur (39) entre cet arbre à cames et un autre accouplement débrayable (36) pour la liaison à rotation entre ledit dispositif et l'arbre d'entraînement (16) pour former l'autre des voies de transmission (VT2).

7. Procédé pour l'entraînement en déplacement d'un véhicule selon la revendication 6, **caractérisé en ce qu'**il consiste à équiper l'une des voies de transmission de mouvement en rotation (VT2) avec un dispositif de réduction de vitesse de rotation (49) de l'arbre (12) pour obtenir une rotation de l'arbre d'entraînement (16) selon une vitesse de rotation différente de celle de l'autre des voies.

8. Procédé pour l'entraînement en déplacement d'un véhicule selon la revendication 6 ou 7, **caractérisé en ce qu'**il consiste, pour réaliser le démarrage du moteur thermique (10), à alimenter la machine électrique (14) par les accumulateurs (72) et à relier le rotor (16) de cette machine avec l'arbre (12) du moteur (10) par l'une des voies de transmission de mouvement.

9. Procédé pour l'entraînement en déplacement d'un véhicule selon la revendication 6 ou 7, **caractérisé en ce qu'**il consiste, pour réaliser la recharge des accumulateurs (72), à relier l'arbre (12) du moteur (10) au rotor (16) de la machine électrique (14) par l'une des voies de transmission de mouvement.

10. Procédé pour l'entraînement en déplacement d'un véhicule selon la revendication 6 ou 7, **caractérisé en ce qu'**il consiste, lors des phases de freinage du véhicule, à récupérer l'énergie mécanique de l'essieu moteur (60) pour la transmettre à l'arbre (12) du moteur en reliant l'arbre d'entraînement (16, 90) audit arbre par l'une des voies de transmission de mouvement.

## Patentansprüche

1. System für den Bewegungsantrieb eines Hybrid-Kraftfahrzeugs, umfassend einen Verbrennungsmotor (10) mit einer Welle (12), eine Elektromaschine (14) mit einem Rotor (16), die mit elektrischen Akkumulatoren (72) verbunden ist, eine Antriebswelle (16), die in direkter Drehung mit dem Rotor verbunden ist und in Drehung von der Maschine und/oder dem Motor gesteuert wird, um die Antriebsachse (60) des Fahrzeugs in Drehung zu betätigen, und eine Vorrichtung zur Änderung der Drehgeschwindigkeit (13) zwischen der Antriebswelle und der Welle (12, 90) des Motors (10), umfassend mindestens zwei alternative Wege zur Drehbewegungsübertragung (VT1, VT2) auf die Antriebsachse (60), **dadurch gekennzeichnet, dass** einer der Übertragungswege (VT1) die Welle (12) des Motors (10) und eine ausrückbare Kupplung (30) für die Drehverbindung mit der Antriebswelle (16, 90) umfasst, und dass der andere der Übertragungswege (VT2) die Welle (12) des Motors, eine Vorrichtung zur Verringerung der Drehgeschwindigkeit (49) der Welle des Motors, umfassend eine Drehzahluntersetzungseinrichtung zur Bewegungsübertragung (20) zwischen der Welle (12) und mindestens einer der Nockenwellen (18), und eine weitere Drehzahluntersetzungseinrichtung zur Bewegungsübertragung (39) zwischen dieser Nockenwelle und einer weiteren ausrückbaren Kupplung (36) für die Drehverbindung zwischen der Vorrichtung zur Verringerung der Geschwindigkeit und der Antriebswelle (16, 19) umfasst.

2. System für den Bewegungsantrieb eines Kraftfahrzeugs nach Anspruch 1, **dadurch gekennzeichnet, dass** die Antriebswelle (16) eine ausrückbare Kupplung (50) für die Übertragung ihrer Drehbewegung auf die Antriebsachse (60) trägt.

3. System für den Bewegungsantrieb eines Kraftfahrzeugs nach einem der vorhergehenden Ansprüche, **dadurch gekennzeichnet dass** die Antriebswelle einen Aktuator (34) trägt, um die eine oder die andere der Kupplungen (30, 36) operativ zu setzen.

4. System für den Bewegungsantrieb eines Kraftfahrzeugs nach Anspruch 1, **dadurch gekennzeichnet, dass** die Antriebswelle den Rotor (16) der Elektromaschine (14) umfasst.

5. System für den Bewegungsantrieb eines Kraftfahrzeugs nach einem der vorhergehenden Ansprüche, **dadurch gekennzeichnet, dass** die Antriebswelle (16) mit der Antriebsachse durch eine Vorrichtung zur Bewegungsübertragung (62) verbunden ist.

6. Verfahren für den Bewegungsantrieb eines Hybrid-Kraftfahrzeugs, umfassend einen Verbrennungsmotor (10) mit einer Welle (12), eine Elektromaschine (14) mit einem Rotor (16), die mit elektrischen Akkumulatoren (72) verbunden ist, eine Antriebswelle (16), die in direkter Drehung mit dem Rotor verbunden ist und in Drehung von der Maschine und/oder dem Motor gesteuert wird, um die Antriebsachse (60) des Fahrzeugs in Drehung zu betätigen, und eine Vorrichtung zur Änderung der Drehgeschwindigkeit (13) zwischen der Antriebswelle und der Welle (12) des Motors (10), wobei bei diesem Verfahren die Welle (12) des Motors (10) mit der Antriebswelle (16, 90) der Antriebsachse (60) durch mindestens zwei alternative Wege zur Drehbewegungsübertragung (VT1, VT2) verbunden ist, **dadurch gekennzeichnet, dass** es darin besteht, die Welle (12) des Motors (10) und eine ausrückbare Kupplung (30), die mit der Antriebswelle (16) verbunden sind, zu verbinden, um einen der Übertragungswege (VT1) zu bilden, und die Welle (12) des Motors, eine Vorrichtung zur Verringerung der Drehgeschwindigkeit (49) der Welle des Motors, umfassend eine Drehzahluntersetzungseinrichtung zur Bewegungsübertragung (20) zwischen der Welle (12) und mindestens einer der Nockenwellen (18), und eine weitere Drehzahluntersetzungseinrichtung zur Bewegungsübertragung (39) zwischen dieser Nockenwelle und einer weiteren ausrückbaren Kupplung (36) für die Drehverbindung zwischen der Vorrichtung und der Antriebswelle (16) zu verbinden, um den anderen der Übertragungswege (VT2) zu bilden.

7. Verfahren für den Bewegungsantrieb eines Fahrzeugs nach Anspruch 6, **dadurch gekennzeichnet, dass** es darin besteht, einen der Drehbewegungsübertragungswege (VT2) mit einer Drehzahluntersetzungseinrichtung (49) der Welle (12) auszustatten, um eine Drehung der Antriebswelle (16) mit einer anderen Drehgeschwindigkeit als jene des anderen der Wege zu erhalten.

8. Verfahren für den Bewegungsantrieb eines Fahrzeugs nach Anspruch 6 oder 7, **dadurch gekennzeichnet, dass** es darin besteht, für das Starten des Verbrennungsmotors (10) die Elektromaschine (14) über die Akkumulatoren (72) zu speisen und den Rotor (16) dieser Maschine mit der Welle (12) des Motors (10) über einen der Bewegungsübertragungswelle zu verbinden.

9. Verfahren für den Bewegungsantrieb eines Fahrzeugs nach Anspruch 6 oder 7, **dadurch gekennzeichnet, dass** es darin besteht, für das Aufladen der Akkumulatoren (72) die Welle (12) des Motors (10) mit dem Rotor (16) der Elektromaschine (14) über einen der Bewegungsübertragungswege zu verbinden.

10. Verfahren für den Bewegungsantrieb eines Fahrzeugs nach Anspruch 6 oder 7, **dadurch gekennzeichnet, dass** es darin besteht, während der Bremsphasen des Fahrzeugs die mechanische Energie der Antriebsachse (60) wiederzugewinnen, um sie auf die Welle (12) des Motors zu übertragen, wobei die Antriebswelle (16, 90) mit der Welle über einen der Bewegungsübertragungswege verbunden wird.

## Claims

1. A travel drive system for a hybrid type motor vehicle comprising a thermal engine (10) with a shaft (12), an electric machine (14) with a rotor (16) connected to electric accumulators (72), a drive shaft (16) rotatingly connected directly to the rotor and rotatingly controlled by said machine and/or said engine for rotatingly actuating motive axle (60) of the vehicle, and a rotating speed variation device (13) between said drive shaft and shaft (12, 90) of engine (10) comprising at least two alternative paths (VT1, VT2) for transmitting the rotating motion to motive axle (60), **characterized in that** one (VT1) of the transmission paths comprises shaft (12) of engine (10) and a disengageable coupling (30) for rotating connection with drive shaft (16, 90) and **in that** the other (VT2) transmission path comprises engine shaft (12), an engine shaft rotating speed reduction device (49) comprising a speed-reducer motion transmission device (20) between shaft (12) and at least one of camshafts (18) and another speed-reducer motion transmission device (39) between this camshaft and another disengageable coupling (36) for rotating connection between said rotating speed reduction device and drive shaft (16, 90).

2. A travel drive system for a motor vehicle as claimed in claim 1, **characterized in that** drive shaft (16) carries a disengageable coupling (50) for transmission of its rotating motion to motive axle (60).

3. A travel drive system for a motor vehicle as claimed in any one of the previous claims, **characterized in that** the drive shaft carries an actuator (34) for operating one or the other of couplings (30, 36).

4. A travel drive system for a motor vehicle as claimed in claim 1, **characterized in that** the drive shaft comprises rotor (16) of electric machine (14).

5. A travel drive system for a motor vehicle as claimed in any one of the previous claims, **characterized in that** drive shaft (16) is connected to the motive axle by a motion transmission device (62).

6. A method for travel drive of a hybrid type motor vehicle comprising a thermal engine (10) with a shaft (12), an electric machine (14) with a rotor (16) connected to electric accumulators (72), a drive shaft (16) rotatingly connected directly to the rotor and controlled by said machine and/or said engine for rotatingly actuating motive axle (60) of the vehicle, and a rotating speed variation device (13) between said drive shaft and shaft (12) of engine (10), a method wherein shaft (12) of engine (10) is connected to drive shaft (16, 90) of motive axle (60) by at least two alternative rotating motion transmission paths (VT1, VT2), **characterized in that** it consists in connecting shaft (12) of engine (10) and a disengageable coupling (30) connected to drive shaft (16) so as to form one (VT1) of the transmission paths, and in connecting engine shaft (12), an engine shaft rotating speed reduction device (49) comprising a speed-reducer motion transmission device (20) between shaft (12) and at least one of camshafts (18) and another speed-reducer motion transmission device (39) between this camshaft and another disengageable coupling (36) for rotating connection between said device and drive shaft (16) so as to form the other transmission path (VT2).

7. A method for travel drive of a motor vehicle as claimed in claim 6, **characterized in that** it consists in providing one of the rotating motion transmission paths (VT2) with a device (49) for reducing the rotating speed of shaft (12) so as to obtain a drive shaft (16) rotation with a different rotating speed from that of the other path.

8. A method for travel drive of a motor vehicle as claimed in any one of claims 6 or 7, **characterized in that** it consists, for starting thermal engine (10), in supplying electric machine (14) by means of accumulators (72) and in connecting rotor (16) of this machine to shaft (12) of engine (10) through one of the motion transmission paths.

9. A method for travel drive of a motor vehicle as claimed in any one of claims 6 or 7, **characterized in that** it consists, for recharging accumulators (72), in connecting shaft (12) of engine (10) to rotor (16) of electric machine (14) through one of the motion transmission paths.

10. A method for travel drive of a motor vehicle as claimed in any one of claims 6 or 7, **characterized in that** it consists, during braking phases of the vehicle, in recovering the mechanical energy of motive axle (60) so as to transmit it to engine shaft (12) by connecting drive shaft (16, 90) to said shaft through one of the motion transmission paths.
